# EUROPÄISCHE PATENTANMELDUNG

(11) **EP 1 271 617 A2**
(43) Veröffentlichungstag der Anmeldung: **02.01.2003**
(21) Anmeldenummer: 02100717.4
(22) Anmeldetag: 18.06.2002
(51) Int. Cl.: H01J 61/44

(54) **Niederdruckgasentladungslampe mit Leuchtstoffbeschichtung**

(30) Priorität: 20.06.2001 DE 10129630
(71) Anmelder: Philips Corporate Intellectual Property GmbH, 20099 Hamburg (DE); Koninklijke Philips Electronics N.V., 5621 BA Eindhoven (NL)
(72) Erfinder: Jüstel, Thomas, c/o Philips Corp. Int. Prop. GmbH, 52066, Aachen (DE); Hilbig, Rainer, c/o Philips Corp. Int. Prop. GmbH, 52066, Aachen (DE); Feldmann, Claus, c/o Philips Corp. Int. Prop. GmbH, 52066, Aachen (DE); Jungk, Hans-Otto, c/o Philips Corp. Int. Prop. Gmb, 52066, Aachen (DE); Mayr, Walter, c/o Philips Corp. Int. Prop. GmbH, 52066, Aachen (DE)
(74) Vertreter: Volmer, Georg, Dipl.-Ing.

(57) **Zusammenfassung**

Niederdruckgasentladungslampe ausgerüstet mit einem Gasentladungsgefäß mit einer Gasfüllung, die Quecksilber enthält, mit Elektroden, mit Mitteln zur Zündung und Aufrechterhaltung einer Gasentladung und mit einer Leuchtstoffbeschichtung, die mindestens eine Leuchtstoffschicht umfasst und einen im UV-C-Leuchtstoff und einen durch UV-C-Strahlung anregbaren Leuchtstoff enthält.

## Beschreibung

Die Erfindung betrifft eine Niederdruckgasentladungslampe, insbesondere eine Quecksilber-Niederdruckgasentladungslampe, ausgerüstet mit einem Gasentladungsgefäß mit einer Gasfüllung, die Quecksilber enthält, mit einer Leuchtstoffbeschichtung, mit Elektroden und mit Mitteln zur Zündung und Aufrechterhaltung einer Gasentladung.

Die Lichterzeugung in Quecksilber-Niederdruckgasentladungslampen beruht darauf, dass bei der Gasentladung in der quecksilberhaltigen Gasfüllung ein Plasma entsteht, das neben einem Anteil an sichtbarem Licht auch einen besonders hohen Anteil an kurzwelliger UV-Strahlung emittiert. Die Leuchtstoffe in der Leuchtstoffbeschichtung der Lampe absorbieren die UV-Strahlung und reemittieren sie als sichtbares Licht.

Die Leuchtstoffe sind dabei das Endglied der Energietransferkette, in der in der Lampe elektrische Energie in sichtbares Licht umgewandelt wird. Die Effizienz einer Niederdruckgasentladungslampe mit einer Leuchtstoffschicht hängt daher entscheidend von elektrooptischen Wirkungsgrades der Leuchtstoffe ab, d.h. wie vollständig das erzeugte UV-Licht im Leuchtstoff absorbiert wird und wie vollständig anschließend das erzeugte sichtbare Licht die Lampe in Richtung des Betrachters verlässt.

Ein Nachteil der bekannten Quecksilber-Niederdruckgasentladungslampen besteht darin, dass durch die Einwirkung kurzwelliger UV-Strahlung auf die Leuchtstoffbeschichtung ebenso wie durch die Rekombination von Quecksilberionen mit Elektronen auf der Leuchtstoffoberfläche bzw. durch den Einfall angeregter Quecksilberatome und Elektronen auf die Leuchtstoffschicht das Emissionsvermögen der Leuchtstoffe, insbesondere von BaMgAl₁₀O₁₇:Eu²⁺, mit der Zeit zurückgeht. Das äußert sich in einem Rückgang des elektrooptischen Wirkungsgrades mit der Betriebsdauer.

Diese Degradation ist besonders stark unter dem Einfluss von VUV-Strahlung mit einer Wellenlänge kleiner 200 nm und äußert sich nicht nur in einer Verschlechterung des elektrooptischen Wirkungsgrades sondern auch in einer Verschiebung des Farbpunktes.

Aus DE 197 37 920 ist es bekannt, die Degradation der Leuchtstoffe in einer Niederdruckgasentladungslampe dadurch zu vermindern, dass das Entladungsgefäß einen für elektromagnetische Strahlung durchlässigen Innenkolben bildet, der von einem Außenkolben umgeben ist und die Innenseite des Außenkolbens und/oder die Außenseite des Innenkolbens mit einer Leuchtstoffschicht versehen sind.

Dadurch wird verhindert, dass durch die Rekombination von Quecksilberionen mit Elektronen auf der Leuchtstoffoberfläche bzw. durch den Einfall angeregter Quecksilberatome und Elektronen auf die Leuchtstoffschicht das Emissionsvermögen der Leuchtstoffe mit der Zeit zurückgeht. Die Degradation der Leuchtstoffe durch die Einwirkung von kurzwelliger UV-Strahlung wird dadurch jedoch nicht beeinflusst.

Es ist daher eine Aufgabe der vorliegenden Erfindung, eine Niederdruckgasentladungslampe mit einer Leuchtstoffbeschichtung zur Verfügung zu stellen, bei der die Degradation der Leuchtstoffe während der Betriebsdauer der Lampe vermindert ist.

Erfindungsgämäß wird die Aufgabe gslöst durch eine Niederdruckgasenfladungslampe ausgerüstet mit einem Gasentladungsgsfäß mit einer Gasfüllung, die Quecksilber enthält, mit Elektroden, mit Mitteln zur Zündung und Aufrechterhaltung einer Gasentladung und mit einer Leuchtstoffbeschichtung, die mindestens eine Leuchtstoffschicht umfasst und einen UV-C- Leuchtstoff und einen durch UV-C-Strahlung anregbaren Leuchtstoff enthält.

Der UV-C-Leuchtstoff in der Leuchtstoffbeschichtung wirkt wie ein Konverter. Er absorbiert den Anteil der Quecksilberstrahlung im hochenergetischen VUV-Bereich mit einem Emissionsmaximum bei 185 nm und emittiert Strahlung im längerwelligen UV-C-Bereich von 230 bis 280 nm. Dadurch wird die Degradation der Leuchtstoffe durch die hochenergetische VUV-Strahlung verhindert.

Im Rahmen der vorliegenden Erfindung ist es bevorzugt, dass der UV-C-Leuchtstoff einen Aktivator aus der Gruppe Pb²⁺, Bi³⁺ und Pr³⁺ in einem Wirtsgitter enthält.

Diese UV-C Strahlung emittierende Leuchtstoffe vereinen eine sehr gute Absorption im VUV-Bereich mit einem hohen Absorptionskoeffizienten ε = 10 000 l/cm·mol bis 100 000 l/cm·mol und einer Emissionsquantenausbeute > 90 %. Im Gegensatz zu anderen Leuchtstoffen werden sie durch die VUV-Strahlung kaum degradiert.

Es kann bevorzugt sein, dass der UV-C-Leuchtstoff Pr³⁺ und La³⁺ enthält. Diese Leuchtstoffe strahlen UV-C-Strahlung mit zwei Banden im Bereich von 220 und 265 nm ab. Dort liegt das Maximum der Absorption von Halophosphatleuchtstoffen und Dreibandenleuchtstoffgemischen.

Es kann auch bevorzugt sein, dass der UV-C-Leuchtstoff Pr³⁺ und Y³⁺ enthält.

Besonders bevorzugt ist, dass der UV-C-Leuchtstoff aus der Gruppe LaPO₄:Pr, LaBO₃:Pr, LaB₃O₆:Pr, YBO₃:Pr, YPO₄:Pr und Y₂SiO₅:Pr ausgewählt ist.

Besonders vorteilhafte Wirkungen entfaltet die Erfindung gegenüber dem Stand der Technik, wenn der UV-C-Leuchtstoff aus der Gruppe YPO₄:Bi und LuPO₄:Bi ausgewählt ist. Diese UV-C-Leuchtstoffe sind für sichtbare Strahlung und die Hg-Emission bei 254 nm transparent.

Im Rahmen der vorliegenden Erfindung ist es bevorzugt, dass der durch UV-C-Strahlung anregbare Leuchtstoff einen Aktivator ausgewählt aus der Gruppe Ce(III), Tb(III), Eu(II), Mn(II) und Sb(III) enthält. Diese Leuchtstoffe mit den oxidierbaren Aktivatorionen Ce(III), Tb(III), Mn(II), Eu(II) und Sb(III) sind von einer Degradation durch Photooxidation besonders betroffen und profitieren besonders von der Erfindung

Nach einer Ausführungsform der Erfindung ist der UV-C-Leuchtstoff in einer ersten Leuchtstoffschicht und der durch UV-C-Strahlung anregbare Leuchtstoff in einer zweiten Leuchtstoffschicht enthalten.

Nach einer bevorzugten Ausführungsform der Erfindung hat der UV-C-Leuchtstoff eine Korngröße 10 nm < d < 500 nm und ist in einer ersten Leuchtstoffschicht und der durch UV-C-Strahlung anregbare Leuchtstoff in einer zweiten Leuchtstoffschicht enthalten.

Eine Leuchtstoffschicht, die einen UV-C-Leuchtstoff mit einer Korngröße im Nanobereich enthält, bildet eine sehr dichte Schicht, die den durch UV-C-Strahlung anregbaren Leuchtstoff von der VUV-Strahlung des Quecksilberplasmas sicher abschirmt. Außerdem mindert diese sehr dichte Schicht die Rekombination von Quecksilberionen mit Elektronen auf der Oberfläche der Leuchtstoffschicht.

Nachfolgend wird die Erfindung anhand einer Figur weiter erläutert.

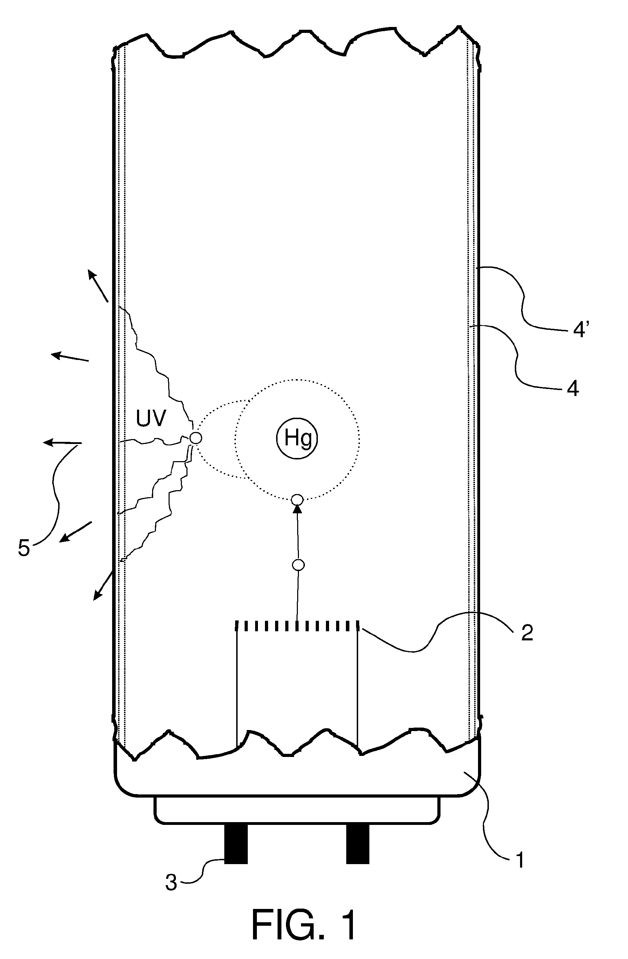

- Fig. 1: zeigt beispielhaft eine Niederdruckgasentladungslampe mit Quecksilberfüllung, d.h. eine Leuchtstofflampe mit zwei Leuchtstoffschichten.

In dieser Ausführungsform der Erfindung besteht die Gasentladungslampe aus einem rohrförmigen Lampenkolben 1 in Stab-, Ring oder U-Form, der das Gasentladungsgefäß für die Niederdruck-Quecksilber-Gasentladung bildet. An beiden Enden des Innenkolbens sind Elektroden 2 eingeschmolzen, über die die Gasentladung gezündet werden kann. Als Anschluss dienen Zweistiftsockel 3. Das Glasrohr enthält neben einer Edelgasfüllung aus Argon eine geringe Menge Quecksilber bzw. Quecksilberdampf, der unter Betriebsbedingungen zum Leuchten angeregt, die Hg-Resonanzlinien bei den Wellenlängen von 185,0 nm, 253,7 nm, 406 nm und 436 nm emittiert.

Es hat sich als vorteilhaft erwiesen, wenn die Leuchtstoffbeschichtung aus zwei Leuchtstoffschichten besteht.

In der in Fig. 1 gezeigten Ausführungsform der Erfindung ist die Innenseite des Glasrohrs mit einem ersten Leuchtstoffschicht 4 versehen. Der erste Leuchtstoffschicht 4 enthält einen UV-C-Strahlung absorbierenden Leuchtstoff oder ein UV-C-Strahlung absorbierenden Leuchtstoffgemisch. Die Innenseite der ersten Leuchtstoffschicht ist mit einer zweiten Leuchtstoffschicht 4', die einen UV-C- Leuchtstoff enthält, versehen.

Die innere Leuchtstoffschicht, die einen UV-C-Leuchtstoff enthält, schirmt die äußere Leuchtstoffschicht gegenüber der Strahlung der Quecksilberentladung ab. Das gilt besonders, wenn der UV-C-Leuchtstoff eine Korngröße im Nanobereich hat, so dass diese Leuchtstoffschicht sehr dicht und geschlossen ist.

Alternativ kann Leuchtstoffbeschichtung aus einer Leuchtstoffschicht auf der Innenwand des Gasentladungsgefäßes, die den UV-C-Leuchtstoff zusammen mit dem durch UV-C-Strahlung anregbaren Leuchtstoff enthält, bestehen. Der UV-C-Leuchtstoff kann in dieser Ausführungsform das Füllmittel ersetzen, das üblicherweise der Leuchtstoffschicht zugesetzt wird, um eine gleichmäßige Lichtabstrahlung zu erreichen. Das gilt besonders wenn als UV-C-Leuchtstoff ein Leuchtstoff mit einer Korngröße im Nanobereich gewählt wird

Bevorzugt wird der UV-C-Leuchtstoff in einer Menge von 5 bis 20 Gew.-% bezogen auf die Leuchtstoffbeschichtung zugesetzt.

Die Niederdruck-Quecksilber-Entladungslampe umfasst weiterhin Mittel zur Erzeugung und Aufrechterhaltung einer Niederdruck-Quecksilbergasentladung, wie z.B. Drossel und Starter.

Der UV-C-Leuchtstoff ist ein Leuchtstoff, dessen Absorptionsmaximum im VUV-Bereich zwischen 105 und 200 nm liegt und der im UV-C-Bereich zwischen 230 und 280 nm emittiert.

Der UV-C-Leuchtstoff besteht grundsätzlich aus einem Wirtsgitter, das mit einigen Prozent eines Aktivators dotiert ist. Das Wirtsgitter ist immer ein anorganisches sauerstoffhaltiges Material wie Oxide, Aluminate, Phosphate, Borate, Sulfate oder Silikate. Der Aktivator ist ein Metallion aus der Gruppe Pr³⁺, Bi³⁺ und Pb²⁺. CaSO₄:Pb, SrSO₄:Pb, MgSO₄:Pb, (Ca,Mg)SO₄:Pb (Ca,Mg,Sr)SO₄:Pb, (Ca,Sr)SO₄:Pb, CaLi₂SiO₄:Pb, SrSiO₃:Pb, (Ca,Sr,Ba)SiO₃:Pb, Ba(Y,Gd,Lu)B₉O₁₆:Bi, YF₃Bi, YOF:Bi, (Gd,Y)OF:Bi,Pr, Y₃Al₅O₁₂:Bi, (Gd,Y)₃Al₅O₁₂:Bi, (Gd,Y)₃(Al,Ga)₅O₁₂:Bi, (Y,Lu)PO₄:Pr, (Lu,Y)BO₃:Pr oder ScBO₃:Pr sind als Leuchtstoff geeignet. Besonders bevorzugt sind Leuchtstoffe, die Praseodym enthalten, wie z.B. LaPO₄:Pr, LaBO₃:Pr, LaB₃O₆:Pr, YBO₃:Pr, YPO₄:Pr und Y₂SiO₅:Pr. Es können auch Leuchtstoffe bevorzugt sein, die Wismut enthalten, wie z.B. YPO₄:Bi, (Y,Lu)PO₄ und LuPO₄:Bi.

Diese UV-C-Leuchtstoffe werden bevorzugt mit einer Korngrößenverteilung im Nanobereich und einer mittleren Korngröße von 10 bis 500 nm eingesetzt.

Der UV-C-Strahlung absorbierenden Leuchtstoff oder das UV-C-Strahlung absorbierenden Leuchtstoffgemisch absorbiert die von der Niederdruckquecksilberentladung und von dem UV-C-Leuchtstoff emittierte Strahlung und wandelt sie in sichtbares Licht um. Durch geeignete Wahl der UV-C-Strahlung absorbierenden Leuchtstoffe kann man dem Licht der Niederdruckgasentladungslampe jede gewünschte Farbe geben. In der Regel werden für die Erfindung UV-C-Strahlung absorbierende Leuchtstoffe und Leuchtstoffgemische verwendet, die ein weiße Licht erzeugen. Es kann aber auch bevorzugt sein, als UV-C-Strahlung absorbierende Leuchtstoffe und Leuchtstoffgemische UV-A-Leuchtstoffe zu verwenden, um eine Bräunungslampe herzustellen.

Geeignete UV-C-Strahlung absorbierende Leuchtstoffe sind beispielsweise Calciumhalophosphat Ca₅(PO₄)₃(F,Cl):Sb³⁺,Mn²⁺ allein oder im Gemisch mit Strontiummagnesiumphosphat (Sr,Mg)₃(PO₄)₂:Sn²⁺, Calciummetasilikat CaSiO₃:Pb²⁺,Mn²⁺ oder Magnesiumarsenat Mg₆As₂O₁₁:Mn⁴⁺, Strontiumhalogenphosphat Sr₅(PO₄)₃(F,Cl):Sb³⁺ oder Calciumwolframat CaWO₄:Pb²⁺ sowie das konventionelle Drei-Banden-Leuchtstoffgemisch aus BaMgAl₁₀O₁₇:Eu, CeMgAl₁₁O₁₉:Tb oder LaPO₄:Ce,Tb und Y₂O₃:Eu allein oder mit weiteren Leuchtstoffen gemischt.

Diese UV-C-Strahlung absorbierenden Leuchtstoffe lassen sich in einer optimalen Korngrößenverteilung mit einer mittleren Korngröße von 0.5 bis 10 µm herstellen. Sie wird bestimmt durch die Eigenschaften des Leuchtstoffes UV-Strahlung zu absorbieren und sichtbare Strahlung sowohl zu absorbieren als auch zu streuen, aber auch durch die Notwendigkeit, eine an der Glaswand fest haftende Leuchtstoffschicht zu bilden. Die letztgenannte Forderung wird nur von sehr kleinen Körnern erfüllt, deren Lichtausbeute allerdings geringer ist als die etwas größerer Körner.

Die optimale Dicke der Leuchtstoffschicht auf dem Innenkolben liegt bei 30 bis 50 nm. Denn einerseits darf die Schicht nur so dünn sein, dass noch genügend UV-Strahlung absorbiert wird, aber auch nur so dick, dass nicht zuviel der sichtbaren Strahlung, die in den innen liegenden Körnern der Leuchtstoffschicht entstanden ist, absorbiert wird

Die Herstellung der Leuchtstoffe erfolgt üblicherweise durch eine Festkörperreaktion aus den Ausgangsverbindungen als feinkörnige Pulver mit einer Komgrößenverteilung zwischen 0,5 und 1 µm.

Um UV-C-Leuchtstoffe mit eine Korngröße im Nanobereich zwischen 10 und 1000 nm herzustellen, kann ein Sol-Gel-Verfahren verwendet werden. Nach einer ersten Variante des Sol-Gel-Verfahrens werden die Acetate der Aktivatormetalle und gegebenenfalls der Metalle des Wirtsgitters in Diethylenglykol oder einem Diethylenglykol-Wassergsmisch gelöst und mit einer Verbindung des Anions des Leuchtstoffes gsfällt. UV-Leuchtstoffe mit einem Phosphat -Wirtsgitter können nach einer weiteren Variante des Sol-Gel-Verfahrens in einem organischen Phosphat (Phosphorsäureester) als Lösungsmittel als Pulver mit einer Korngröße im Nanobereich synthetisiert werden.

Die Leuchtstoffe werden auf die Gefäßwände des Gasentladungsgsfäßes üblicherweise mittels eines Flutungsverfahrens aufgsbracht. Die Beschichtungssuspensionen für die Flutung enthalten Wasser oder eine organischen Verbindung wie Butylacetat als Lösungsmittel. Die Suspension wird durch Zugabe von Hilfsmitteln, z.B. Cellulosederivaten, Polymethacrylsäure oder Polypropylenoxid, stabilisiert und in ihren rheologischen Eigenschaften beeinflusst. Üblicherweise verwendet man noch weitere Additive, wie z. B. Dispergiermittel, Entschäumer und Pulverkonditionierer, wie Aluminiumoxid, Aluminiumoxinitrid oder Borsäure. Die Leuchtstoffsuspension wird als dünne Schicht auf die Innenseite des Gasentladungsgefäßes gegossen, gespült oder gesprüht. Die Beschichtung wird anschließend mit Heißluft getrocknet und bei 600°C eingebrannt. Die Schichten haben im allgemeinen eine Schichtdicke von 1 bis 50 µm.

Wenn eine Wechselstromspannung an die Elektroden angelegt wird, kann in der quecksilber- und argonhaltigen Gasfüllung eine elektrische Gasentladung gezündet werden. Dadurch bilden sich ein Plasma mit Gasatomen oder Molekülen, die angeregt oder ionisiert sind. Bei der Rückkehr der Atome in ihren Grundzustand sowie bei der Rekombination von Elektronen und Ionen wird ein mehr oder weniger großer Teil der potentiellen Energie in UV-Strahlung der Wellenlängen 104 nm (Ar), 106nm (Ar), 185 nm (Hg), 254 nm(Hg) und in sichtbare Strahlung umgewandelt.

Diese Umwandlung von Elektronenenergie in UV-Strahlung erfolgt in der Quecksilberniederdruckgasentladung sehr effizient.

Die erzeugten VUV-Photonen mit einer Wellenlänge von Wellenlängen 104 nm (Ar), 106 nm (Ar) und 185 nm (Hg) werden von dem UV-C-Leuchtstoff absorbiert und die Anregungsenergie wird in dem längerwelligen UV-C-Bereich des Spektrums wieder abgegeben. Der Absorptionskoeffizient der mit Pb²⁺, Bi³⁺ oder Pr³⁺ aktivierten Leuchtstoffe ist für die Wellenlängen im VUV-Bereich des Spektrums besonders groß und die Quantenausbeute hoch. Das Wirtsgitter beeinflusst die genaue Lage der Energieniveaus des Aktivatorions, und infolgedessen das Emissionsspektrum.

Die UV-C-Strahlung fällt auf die Leuchtstoffschicht, die den durch UV-C-Strahlung anregbaren Leuchtstoff enthält und regt diesen zur Emission von sichtbarer Strahlung an.

### AUSFÜHRUNGSBEISPIEL 1

Zur Herstellung des UV-C-Leuchtstoffs YPO₄:Bi mit einer mittleren Korngröße von 15 nm wurden 300 ml Tris(ethylhexyl)phosphat mit trockenem Stickstoff gespült und anschließend mit einer Lösung von 10,0 g YCl₃ und 0,16 g BiCl₃ in 100 ml Methanol versetzt. Nachdem Methanol und Wasser bei 40°C im Vakuum abdestilliert worden sind, wurde ein frisch hergestellte Lösung von 6,0 g kristalline Phosphorsäure in einem Gemisch aus 150 ml Tris(ethylhexyl)phosphat und 65,5 ml Trioctylamin zugegeben. Die klare Lösung wurde nachfolgend 2h auf 200°C erhitzt, Nach dem Abkühlen auf Raumtemperatur wird das erhaltene transparente Kolloid mit dem vierfachen Volumen an Methanol versetzt, wonach das Leuchtstoff kristallin ausfällt. Der Leuchtstoff wird abzentrifugiert, mit Methanol gewaschen und getrocknet. Man erhält 9,0 g YPO₄:Bi(1 Mol-%). Das YPO₄:Bi ist kristallin und weist eine mittlere Partikelgröße von 15 nm auf.

Für die Schicht mit durch UV-C-Strahlung anregbaren Leuchtstoffen wurden BaMgAl₁₀O₁₇:Eu, CeMgAl₁₁O₁₉:Tb und Y₂O₃:Eu in Butylacetat mit einem Dispergiermittel suspendiert und mittels eines Flutungsverfahrens auf die Innenseite eines vorbereiteten Lampenkolbens aus Standardglas aufgetragen. Weiterhin wurden 10 ml einer Lösung von YPO₄:Bi in Butylacetat mit Nitrocellulose als Binder auf die erste Leuchtstoffschicht aufgetragen und zu einer 500 nm dicken Schicht aufgetrocknet und bei 400°C ausgabrannt

Der beschichtete Lampenkolben wird in herkömmlicher Art und Weise zusammen mit Ballast und Starter auf einem gemeinsamen Sockel montiert.

Durch die Beschichtung der Lampe mit dem UV-C-Leuchtstoff YPO₄:Bi zusätzlich zu der konventionellen Drei-Banden-Leuchtstoffbeschichtung wird eine Niederdruckquecksilberentladungslampe mit einer erhöhten Langzeitstabilität der Lumenausbeute und des Farbpunktes erhalten.

### AUSFÜHRUNGSBEISPIEL 2

Zur Herstellung des UV-C-Leuchtstoffs LaPO₄:Pr wurden 5,0 g La(Ch₃COO)₃ und 0,5 g Pr(CH₃COO)₃in 50 ml Diethylenglykol gelöst und auf 140°C erhitzt. Zu dieser Lösung wurde eine Lösung von 2,5 g (NH₄)₂HPO₄in 50 ml Diethylenglykol gegeben. Nachfolgend wurde auf 180° C erhitzt und diese Temperatur 4 h gehalten. Nach dem Abkühlen wurde der Leuchtstoff abzentrifugiert. Zur vollständigen Entfernung des Diethylenglykols wird zweimal mit Ethanol oder mit Wasser resuspendiert und erneut abzentrifugiert. Abschließend wird der Leuchtstoff bei 120°C getrocknet. Man erhält 3,7 g LaPO₄:Pr(! Mol-%). Der Leuchtstoff ist nanokristallin und weist eine mittlere Partikelgröße von 60 nm auf.

Für die Schicht mit durch UV-C-Strahlung anregbare Leuchtstoffe wurden Ca₅(PO₄)₃(F,Cl):Sb,Mn in Butylacetat mit einem Dispergiermittel suspendiert und mittels eines Flutungsverfahrens auf die Innenseite des vorbereiteten Lampenkolbens aus Standardglas aufgetragen. Weiterhin wurden 10 ml einer Lösung von LaPO₄:Pr in Butylacetat mit Nitrocellulose als Binder auf die erste Leuchtstoffschicht aufgetragen und zu einer 500 nm dicken Schicht aufgetrocknet und bei 400°C ausgebrannt

Der beschichtete Lampenkolben wird in herkömmlicher Art und Weise zusammen mit Ballast und Starter auf einem gemeinsamen Sockel montiert.

Durch die Beschichtung der Lampe mit dem UV-C-Leuchtstoff LaPO₄:Pr zusätzlich zu der konventionellen Halophosphat-Leuchtstoffbeschichtung wird eine Lampe mit einer erhöhten Langzeitstabilität der Lumenausbeute und des Farbpunktes erhalten.

## Patentansprüche

1. Niederdruckgasentladungslampe ausgerüstet mit einem Gasentladungsgefäß mit einer Gasfüllung, die Quecksilber enthält, mit Elektroden, mit Mitteln zur Zündung und Aufrechterhaltung einer Gasentladung und mit einer Leuchtstoffbeschichtung, die mindestens eine Leuchtstoffschicht umfasst und einen im UV-C-Leuchtstoff und einen durch UV-C-Strahlung anregbaren Leuchtstoff enthält.

2. Niederdruckgasentladungslampe gemäß Anspruch 1,
**dadurch gekennzeichnet,**
**dass** der UV-C-Leuchtstoff einen Aktivator aus der Gruppe Pb²⁺, Bi³⁺ und Pr³⁺ in einem Wirtsgitter enthält.

3. Niederdruckgasentladungslampe gemäß Anspruch 1,
**dadurch gekennzeichnet,**
**dass** der UV-C-Strahlung emittierende Leuchtstoff Pr³⁺ und La³⁺ enthält.

4. Niederdruckgasentladungslampe gemäß Anspruch 1,
**dadurch gekennzeichnet,**
**dass** der UV-C-Leuchtstoff Pr³⁺ und Y³⁺ enthält.

5. Niederdruckgasentladungslampe gsmäß Anspruch 1,
**dadurch gekennzeichnet,**
**dass** der UV-C-Leuchtstoff aus der Gruppe LaPO₄:Pr, LaBO₃:Pr, LaB₃O₆:Pr, YBO₃:Pr, YPO₄:Pr und Y₂SiO₅:Pr ausgewählt ist.

6. Niederdruckgasentladungslampe gemäß Anspruch 1,
**dadurch gekennzeichnet,**
**dass** der UV-C-Leuchtstoff aus der Gruppe YPO₄:Bi und LuPO₄:Bi ausgewählt ist.

7. Niederdruckgasentladungslampe gemäß Anspruch 1,
**dadurch gekennzeichnet,**
**dass** der durch UV-C-Strahlung anregbare Leuchtstoff einen Aktivator ausgewählt aus der Gruppe Ce(III), Tb(III), Eu(II), Mn(II) und Sb(III) enthält.

8. Niederdruckgasentladungslampe gemäß Anspruch 1,
**dadurch gekennzeichnet,**
**dass** der UV-C-Leuchtstoff in einer ersten Leuchtstoffschicht und der durch UV-C-Strahlung anregbare Leuchtstoff in einer zweiten Leuchtstoffschicht enthalten ist.

9. Niederdruckgasentladungslampe gemäß Anspruch 1,
**dadurch gekennzeichnet,**
**dass** hat UV-C-Leuchtstoff eine Korngröße 10 nm < d < 500 nm hat und in einer ersten Leuchtstoffschicht und der durch UV-C-Strahlung anregbare Leuchtstoff in einer zweiten Leuchtstoffschicht enthalten ist.
